# EUROPÄISCHE PATENTSCHRIFT

(11) **EP 1 994 658 B1**
(45) Veröffentlichungstag und Bekanntmachung des Hinweises auf die Patenterteilung: **19.08.2009**
(21) Anmeldenummer: 07726599.9
(22) Anmeldetag: 02.03.2007
(51) Int. Cl.: H04B 10/155

(54) **MODULATOREINRICHTUNG ZUR ERZEUGUNG EINES MIT EINEM BINÄRSIGNAL MODULIERTEN OPTISCHEN ÜBERTRAGUNGSSIGNALS**
MODULATOR DEVICE FOR GENERATING AN OPTICAL TRANSFER SIGNAL MODULATED BY MEANS OF A BINARY SIGNAL
DISPOSITIF MODULATEUR DESTINÉ A PRODUIRE UN SIGNAL DE TRANSFERT OPTIQUE MODULÉ AU MOYEN D'UN SIGNAL BINAIRE

(30) Priorität: 03.03.2006 DE 102006009990
(43) Veröffentlichungstag der Anmeldung: 26.11.2008
(73) Patentinhaber: Nokia Siemens Networks GmbH & Co. KG, 81541 München (DE)
(72) Erfinder: SCHIMPE, Robert, 85521 Ottobrunn (DE)
(86) Internationale Anmeldenummer: PCT/EP2007/052005
(87) Internationale Veröffentlichungsnummer: WO 2007/099165

(56) Entgegenhaltungen:
- EP-A2- 0 825 733
- WO-A-20/05084268
- GB-A- 2 237 469

## Beschreibung

Die Erfindung betrifft eine Modulatoreinrichtung nach dem Oberbegriff des Patentanspruchs 1.

Ein Laser mit einem nachgeschalteten Amplitudenmodulator (Intensitätsmodulator) erzeugt ein optisches Spektrum mit einer Spektrallinie bei der Trägerfrequenz und einer Bandbreite, die größer ist, als die Bandbreite des Informationssignals. Ein solches Emissionsspektrum verringert die insgesamt übertragbare Information in einem Wellenlängen-Multiplexsystem. Eine größere Bandbreite resultiert aufgrund der nichtlinearen Eigenschaften der Übertragungsfaser in stärkeren Verzerrungen des Übertragungssignals. Eine Methode zur Verringerung der Bandbreite ist die duobinäre Codierung. In IEEE Photonics Technology Letters, 1998, Vol. 10, Issue 8, PP.1159 - 1161: "Prechirped Duobinary Modulation" by A. Djupsjöbacka (Ericsson Components, Sweden) ist ein solches Verfahren beschrieben. Diese Art der Codierung ist jedoch sehr aufwendig.

Eine Modulatoreinrichtung nach dem Stand der Technik ist aus Dokument EP-A-0825733 bekannt.

Deshalb ist es Aufgabe der Erfindung, eine einfach realisierbare Modulationseinrichtung zur Erzeugung eines qualitativ hochwertigen Übertragungssignals anzugeben.

Diese Aufgabe wird durch einen Modulator nach Anspruch 1 gelöst.

Vorteilhaft bei dieser Erfindung ist, dass das optische Trägersignal derart frequenzmoduliert wird, dass der optische Träger zumindest weitgehend unterdrückt ist. Das Ansteuersignal für den Frequenzmodulator ist derart vorcodiert, dass nur jeweils bei einem 10 - oder 10-Wechsel eine Frequenzumtastung erfolgt. Erforderlich ist diese Frequenzumtastung nur bei 101-Folgen. Bei längeren 11-Folgen oder 00-Folgen erfolgt dagegen keine Frequenzumtastung. Dem Frequenz-Modulator ist ein Amplitudenmodulator nachgeschaltet, der das bei einer Frequenzumtastung entstehende breite Signalspektrum unterdrückt. Dadurch verschwinden bei einer 1010-Signalfolge außer den der ursprünglichen Trägerfrequenz benachbarten Spektrallinien alle weiteren Spektrallinien. Auch bei einem realen Datensignal bleibt das Spektrum schmal.

Die Schaltung lässt sich besonders kostengünstig aufbauen, wenn als Quelle für das Trägersignal und als Frequenzmodulator ein direkt modulierter Laser verwendet wird.

Durch eine geeignet ausgeführte Ansteuerschaltung können Unsymmetrien in der Amplitude ausgeglichen werden und eine Optimierung des Übertragungssignals bezüglich eines gewünschten Chirps realisiert werden und Laufzeitunterschiede ausgeglichen werden.

Weitere vorteilhafte Weiterbildungen sind in den abhängigen Patentansprüchen angegeben.

Die Erfindung wird anhand von Figuren näher beschrieben.

Es zeigen:
- Figur 1: ein erstes Ausführüngsbeispiel der Erfindung
- Figur 2: eine kostengünstig zu realisierende Variante der Erfindung und
- Figur 3: ein Zeitdiagramm.

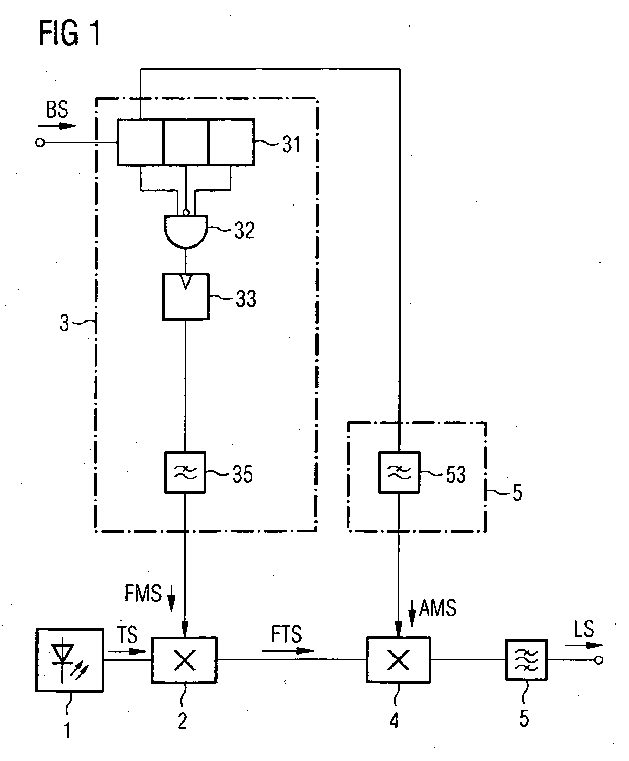

**Figur 1** zeigt ein Blockschaltbild des Modulators. Von einem Laser 1 oder einer sonstigen Signalquelle wird ein Trägerfrequenzsignal TS erzeugt, dass einem Frequenzmodulator 2 zugeführt wird. Dessen frequenzmoduliertes Ausgangssignal FTS wird einem Amplitudenmodulator 4 zugeführt, der ein Binärsignal, die Daten, aufmoduliert werden und so ein Übertragungssignal LS erzeugt wird. Dieses wird ggf. über ein Bandpassfilter 6 ausgesendet. Der Frequenzmodulator wird über eine erste Ansteuerschaltung 3 und der Amplitudenmodulator über eine zweite Ansteuerschaltung 5 vom Binärsignal gesteuert.

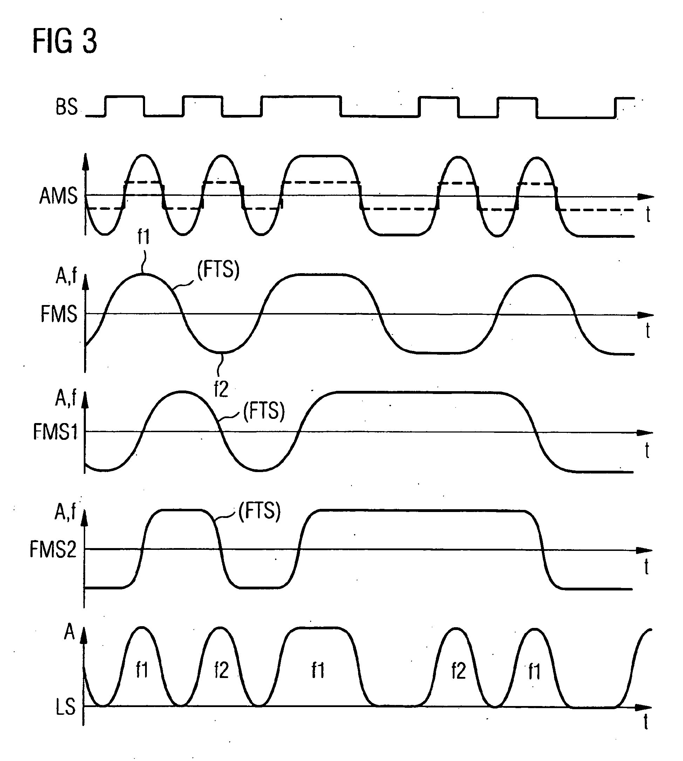

Die Wirkungsweise der Modulatoreinrichtung wird nun anhand eines in **Figur 3** dargestellten Zeitdiagramms näher erläutert. In der ersten Zeile des Zeitdiagramms ist das Binärsignal BS dargestellt. Es beginnt mit einer 10101-Folge, die bei einer Modulation das breiteste Spektrum bewirkt. Es wird zunächst davon ausgegangen, dass bei jeder 10-Folge durch den Frequenzmodulator 2 eine Frequenzumtastung durch die erste Ansteuerschaltung 3 erfolgt. Die erste Ansteuerschaltung 3 beinhaltet einen Precoder 31,32 mit einem Schieberegister 31 und einer Logikschaltung 32. Das Binärsignal wird in das Schieberegister 31 eingeschrieben. Die Darstellung des Binärsignals BS bezieht sich auf den Ausgang der ersten Kippstufe des Schieberegisters 31 (das zugehörige Taktsignal wurde nicht dargestellt). Das Auftreten einer 10-Folge wird in der Logikschaltung 32 überprüft. Tritt diese Folge auf, z. B. nach der ersten logischen 1 bzw. zu Beginn der ersten vollständig dargestellten logischen Null, dann wird eine Kippstufe 33 getriggert, so dass ihr Ausgangszustand wechselt. Über eine erste Filteranordnung 35, die in der Regel auch eine elektrische Anpassung an den Frequenzmodulator durchführt, wird hierdurch ein Frequenz-Modulationsignal FMS erzeugt, das eine Frequenzumtastung von der Frequenz f1 nach f2 bewirkt. Bei der nächsten 10-Kombination erfolgt wieder eine Frequenzumtastung zwischen f2 und f1, was sich dann bei weiteren 10-Folgen wiederholt. Der Frequenzverlauf des frequenzmodulierten Signals FTS entspricht dem Verlauf der Amplitude A des Frequenz-Modulationssignals. Der Modulationsindex soll zwischen 1,8 und 2,6 liegen, bei ca. 2,4 wird der Träger optimal unterdrückt. Insbesondere bei einem Modulationsindex von etwa 2,0 wird eine optimale Signalqualität erzielt.

Die dritte Zeile zeigt ein sinusförmiges Frequenz-Modulationsignal FMS, das bei einer 10-Folge die halbe Grundfrequenz des Binärsignals aufweist. Dessen Formung erfolgt (falls erforderlich) durch die erste Filteranordnung 35, die hier auch die erforderliche Ansteuerspannung für den Frequenzmodulator liefert.

In der vierten Zeile ist eine Frequenz-Modulationsspannung FMS1 für eine vorteilhafte Variante der Modulationseinrichtung dargestellt, bei der unnötige Frequenzumtastungen vermieden werden. Eine Frequenzumtastung erfolgt immer nur dann, wenn eine 101-Folge vorliegt. In Figur 1 wird hier zu der Logikschaltung ein weiteres Eingangssignal über die gestrichelte Verbindung zugeführt.

In der fünften Zeile erfolgt die Frequenzumtastung nicht mehr durch eine sinusförmige Frequenz-Modulationsspannung sondern geht in der halben Zeitdauer vor sich. Im Übrigen entspricht die FM-Modulationsspannung FMS2 der Modulationsspannung der dritten Zeile.

Im Amplitudenmodulator 4 wird das Binärsignal aufgeprägt. Es muss immer auf die richtige zeitliche Zuordnung eines Amplituden-Modulationssignal AMS zum Frequenz-Modulationssignal bzw. zu den Zeiten erfolgen, in denen eine Frequenzumtastung erfolgt. Die zweite Zeile zeigt ein rechteckförmiges (gestrichelt) Modulationssignal, das bis auf eine erforderliche Zeitverzögerung dem Binärsignal BS entspricht, und das sinusförmige Amplituden-Modulationssignal AMS. Während die Frequenzumtastung erfolgt, muss das frequenzmodulierten Signal FTS möglichst unterdrückt und damit die Amplitude Übertragungssignals LS möglichst Null sein, damit die störenden Frequenzanteile ausgeblendet werden. Dies ist bei einer Kombination des Frequenz-Modulationssignals FMS und des Amplituden-Modulationssignals AMS der Fall. Die Zeitfunktion in der untersten, der sechsten Zeile zeigt den Amplitudenverlauf des Übertragungssignals bei dieser Kombination mit einer sinusförmigen Amplitudenmodulation und der Frequenzmodulation FMS.

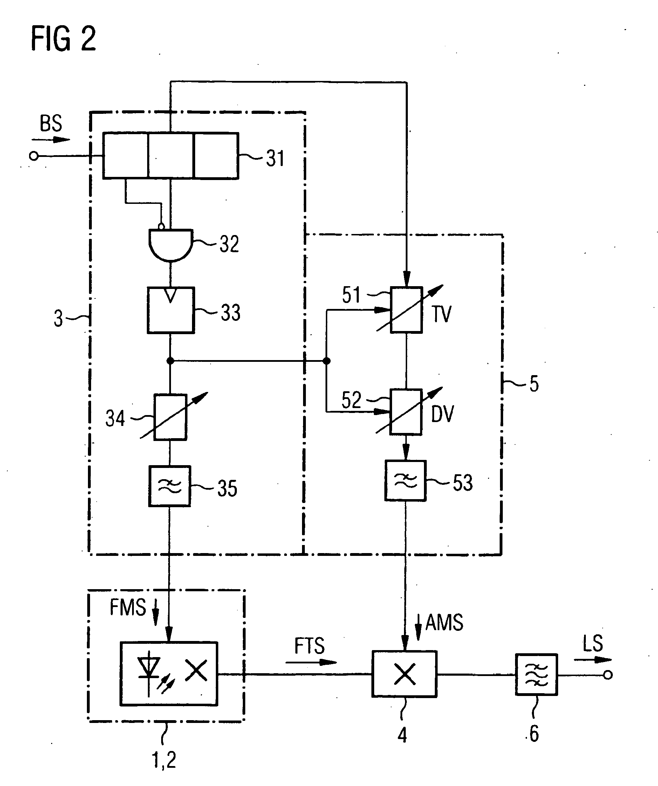

Wird dagegen die Variante mit einer Frequenzumtastung bei 101-Folgen nach Zeile 4 oder 5 realisiert, dann muss die Amplituden-Modulationsspannung um die Dauer eines Bits verzögert werden, wie in Figur 2 dargestellt ist. Bei den hohen Datenraten müssen selbstverständlich die Laufzeiten von Leitungen und Bauelementen berücksichtigt werden.

**Figur 2** zeigt eine Variante der Modulatoreinrichtung, bei der statt eines externen Frequenzmodulators ein direkt frequenzmodulierter Lasers 1,2 als Generator des Trägersignals TS und als Frequenzmodulator verwendet wird. Dabei tritt jedoch auch immer eine Amplitudenmodulation auf, die kompensiert werden sollte. Um Unsymmetrien der unterschiedlichen Amplituden bei der Frequenzumtastung auszugleichen und auch die durch Dispersion der Übertragungsfaser bedingte Laufzeiten auszugleichen, enthält die erste Ansteuerschaltung ein unsymmetrisches oder steuerbares erstes Verzögerungsglied 34 und die zweite Ansteuerschaltung 5 ein unsymmetrisches oder steuerbares zweites Verzögerungsglied 51 sowie ein steuerbares Dämpfungsglied 52. Durch die Verzögerungsglieder können die unterschiedlichen Laufzeiten einer Übertragungsstrecke für beide Umtastfrequenzen f1 und f2 ausgeglichen werden (dies kann auch auf der Empfangsseite erfolgen); durch das steuerbare Dämpfungsglied 52 werden die unterschiedlichen Amplituden des frequenzmodulierten Signals FTS ausgeglichen. Diese hier nur prinzipiell dargestellten Funktionen können mit zahlreichen Schaltungsvarianten realisiert werden.

## Patentansprüche

1. Modulator zur Erzeugung eines mit einem Binärsignal (BS) modulierten optischen Übertragungssignals (LS),
**gekennzeichnet durch,**
einen Frequenzmodulator (2), der ein optisches Trägersignal (TF) moduliert,
einen Precoder (3), dem das Binärsignal (BS) zugeführt wird und der bei einer 1-0-Folge oder einer 0-1-Folge des Binärsignal (BS) über eine erste Ansteuerschaltung (3) eine Frequenzumtastung **durch** den Frequenzmodulator (2) steuert,
einen Amplitudenmodulator (4), dem vom Frequenzmodulator (2) ein frequenzmoduliertes Signal (FTS) zugeführt wird und
eine zweite Ansteuerschaltung (5) für den Amplitudenmodulator (4), der ebenfalls das Binärsignal zugeführt wird und der während der Frequenzumtastung das vom Frequenzmodulator (2) erzeugte frequenzmodulierte Signal (FTS) unterdrückt und hierdurch das optische Übertragungssignal (LS) mit einem schmalen Spektrum erzeugt.

2. Modulator nach Anspruch 1,
**dadurch gekennzeichnet,**
**dass** die erste Ansteuerschaltung (3) derart ausgebildet ist, dass das frequenzmodulierte Signal (FTS) ein Modulationsindex zwischen 1,8 und 2,6 aufweist.

3. Modulator nach Anspruch 1 oder 2,
**dadurch gekennzeichnet,**
**dass** der Precoder (3) derart ausgebildet ist, dass eine Frequenzumtastung nur bei einer 1-0-1-Folge durchgeführt wird.

4. Modulator nach Anspruch einem der vorhergehenden Ansprüche,
**dadurch gekennzeichnet,**
**dass** die erste Ansteuerschaltung (3) und/oder die zweite Ansteuerschaltung (5) derart ausgebildet sind, das die Ansteuerung mit sinusförmigen Modulationssignalen (MSF; MSA) erfolgt.

5. Modulator nach einem der Ansprüche 1 bis 4,
**dadurch gekennzeichnet,**
**dass** die erste Ansteuerschaltung (3) derart ausgebildet ist, dass die Frequenzumtastung innerhalb der Dauer eines Bits erfolgt.

6. Modulator nach einem der vorhergehenden Ansprüche,
**dadurch gekennzeichnet,**
**dass** die erste Ansteuerschaltung (3) und/oder die zweite Ansteuerschaltung (5) ein steuerbares Laufzeitglied (TV) enthält, um die unterschiedlichen Ausbreitungsgeschwindigkeiten der frequenzmodulierten Signale auszugleichen.

7. Modulator nach einem der vorhergehenden Ansprüche,
**dadurch gekennzeichnet,**
**dass** zur Erzeugung des Trägersignals (TS) und gleichzeitig als Frequenzmodulator (2) ein direkt modulierter Laser (1,2) eingesetzt ist.

8. Modulator nach einem der vorhergehenden Ansprüche,
**dadurch gekennzeichnet,**
**dass** die erste Ansteuerschaltung (3) eine erste Filteranordnung (35) zur optimalen Impulsformung enthält.

9. Modulator nach einem der vorhergehenden Ansprüche,
**dadurch gekennzeichnet,**
**dass** die zweite Ansteuerschaltung (5) den Amplitudenmodulator (5) in Abhängigkeit von der Frequenz des vom Frequenzmodulator abgegebenen Signals (FMS) unterschiedlich ansteuert, so dass die Amplitude des Übertragungssignals (LS) bei Aussendung einer logischen 1 gleich bleibt.

10. Modulator nach einem der vorhergehenden Ansprüche,
**dadurch gekennzeichnet,**
**dass** dem Amplitudenmodulator (5) ein Badpassfilter (6) zur Eliminierung von Signalteilen mit unerwünschten Frequenzen nachgeschaltet ist.

## Claims

1. A modulator for generating an optical transfer signal (LS) modulated by means of a binary signal (BS),
**characterized by**
a frequency modulator (2) which modulates an optical carrier signal (TF),
a precoder (3) which is supplied with the binary signal (BS) and uses a first drive circuit (4) to control frequency shift keying by the frequency modulator (2) in the case of a 1-0 sequence or a 0-1 sequence of the binary signal (BS),
an amplitude modulator (4) which is supplied with a frequency-modulated signal (FTS) by the frequency modulator (2), and
a second drive circuit (5) for the amplitude modulator (4), which circuit is likewise supplied with the binary signal and suppresses the frequency-modulated signal (FTS) generated by the frequency modulator (2) during frequency shift keying and thus generates the optical transfer signal (LS) with a narrow spectrum.

2. The modulator as claimed in claim 1,
**characterized in that**
the first drive circuit (3) is designed in such a manner that the frequency-modulated signal (FTS) has a modulation index of between 1.8 and 2.6.

3. The modulator as claimed in claim 1 or 2,
**characterized in that**
the precoder (3) is designed in such a manner that frequency shift keying is carried out only in the case of a 1-0-1 sequence.

4. The modulator as claimed in one of the preceding claims,
**characterized in that**
the first drive circuit (3) and/or the second drive circuit (5) is/are designed in such a manner that driving is effected using sinusoidal modulation signals (MSF; MSA).

5. The modulator as claimed in one of claims 1 to 4,
**characterized in that**
the first drive circuit (3) is designed in such a manner that frequency shift keying is carried out within the duration of one bit.

6. The modulator as claimed in one of the preceding claims,
**characterized in that**
the first drive circuit (3) and/or the second drive circuit (5) contain(s) a controllable delay element (TV) in order to compensate for the different propagation speeds of the frequency-modulated signals.

7. The modulator as claimed in one of the preceding claims,
**characterized in that**
a directly modulated laser (1, 2) is used to generate the carrier signal (TS) and is simultaneously used as the frequency modulator (2).

8. The modulator as claimed in one of the preceding claims,
**characterized in that**
the first drive circuit (3) contains a first filter arrangement (35) for optimum pulse shaping.

9. The modulator as claimed in one of the preceding claims,
**characterized in that**
the second drive circuit (5) drives the amplitude modulator (5) differently on the basis of the frequency of the signal (FMS) emitted by the frequency modulator, with the result that the amplitude of the transfer signal (LS) remains the same when a logic 1 is emitted.

10. The modulator as claimed in one of the preceding claims,
**characterized in that**
a bandpass filter (6) for eliminating signal elements with undesirable frequencies is connected downstream of the amplitude modulator (5).

## Revendications

1. Modulateur destiné à produire un signal de transmission (LS) optique modulé au moyen d'un signal binaire (BS), **caractérisé par** un modulateur de fréquence (2), qui module un signal porteur (TF) optique, un pré-codeur (3), auquel le signal binaire (BS) est amené et qui, avec une séquence -1-0 ou une séquence -0-1 du signal binaire (BS) et au moyen d'un premier circuit de commande (3), commande une modulation par déplacement de fréquence par le modulateur de fréquence (2),
un modulateur d'amplitude (4), auquel un signal (FTS) modulé en fréquence est amené par le modulateur de fréquence (2) et
un second circuit de commande (5) pour le modulateur d'amplitude (4), auquel le signal binaire est également amené et qui supprime pendant la modulation par déplacement de fréquence le signal (FTS) modulé en fréquence et généré par le modulateur de fréquence (2) et génère de ce fait le signal de transmission (LS) optique avec un spectre étroit.

2. Modulateur selon la revendication 1,
**caractérisé en ce que**
le premier circuit de commande (3) est réalisé de telle sorte que le signal modulé en fréquence (FTS) présente un indice de modulation compris entre 1,8 et 2,6.

3. Modulateur selon la revendication 1 ou 2,
**caractérisé en ce que**
le pré-codeur (3) est conçu de telle sorte qu'une conversion par déplacement de fréquence n'est effectuée qu'avec une séquence -1-0-1.

4. Modulateur selon l'une quelconque des revendications précédentes,
**caractérisé en ce que**
le premier circuit de commande (3) et/ou le second circuit de commande (5) sont conçus de telle sorte que la commande s'effectue avec des signaux de modulation sinusoïdaux (MSF ; MSA).

5. Modulateur selon l'une quelconque des revendications 1 à 4,
**caractérisé en ce que**
le premier circuit de commande (3) est conçu de telle sorte que la modulation par déplacement de fréquence s'effectue dans les limites de la durée d'un bit.

6. Modulateur selon l'une quelconque des revendications précédentes,
**caractérisé en ce que**
le premier circuit de commande (3) et/ou le second circuit de commande (5) contient (contiennent) une bascule de retard (TV) contrôlable, afin d'équilibrer les différentes vitesses de propagation des signaux modulés en fréquence.

7. Modulateur selon l'une quelconque des revendications précédentes,
**caractérisé en ce que**
un laser (1, 2) directement modulé est utilisé pour générer le signal porteur (TS) en même temps comme modulateur de fréquence (2).

8. Modulateur selon l'une quelconque des revendications précédentes,
**caractérisé en ce que**
le premier circuit de commande (3) contient un premier agencement de filtre (35) pour la conformation d'impulsion optimale.

9. Modulateur selon l'une quelconque des revendications précédentes,
**caractérisé en ce que**
le second circuit de commande (5) amorce différemment le modulateur d'amplitude (5) en fonction de la fréquence du signal émis par le modulateur de fréquence (FMS), de sorte que l'amplitude du signal de transmission (LS) reste égal lors de l'envoi d'un 1 logique.

10. Modulateur selon l'une quelconque des revendications précédentes,
**caractérisé en ce que**
un filtre passe-bande (6) est branché en aval du modulateur d'amplitude (5) pour l'élimination de parties de signal avec des fréquences inopportunes.
